# EUROPEAN PATENT APPLICATION

(11) **EP 4 607 954 A1**
(43) Date of publication of application: **27.08.2025**
(21) Application number: 23879208.9
(22) Date of filing: 20.10.2023
(51) Int. Cl.: H04R 1/20

(54) **ON-BOARD BASS SHAKER AND AUTOMOBILE AUDIO SYSTEM**

(30) Priority: 21.10.2022 CN 202211296886; 21.10.2022 CN 202222779246 U
(71) Applicant: Suzhou Sonavox Electronics Co., Ltd., Suzhou, Jiangsu 215133 (CN)
(72) Inventor: GAO, Peng, Suzhou, Jiangsu 215133 (CN); DONG, Zhanqing, Suzhou, Jiangsu 215133 (CN); TANG, Zhenyu, Suzhou, Jiangsu 215133 (CN); LU, Wenke, Suzhou, Jiangsu 215133 (CN); GU, Hanyu, Suzhou, Jiangsu 215133 (CN)
(74) Representative: De Vries & Metman
(86) International application number: PCT/CN2023/125650
(87) International publication number: WO 2024/083222

(57) **Abstract**

An on-board bass shaker and an automobile audio system. The on-board bass shaker comprises a bracket, a voice coil, and a magnetic circuit system. The magnetic circuit system is provided with a magnetic gap, the upper end part of the voice coil is inserted into the magnetic gap, and the lower end part of the voice coil is connected to the bracket. The on-board bass shaker further comprises a first positioning support piece and a second positioning support piece. The first positioning support piece and the second positioning support piece each comprise an outer connecting edge, an inner connecting edge, and a main body connected between the outer connecting edge and the inner connecting edge. The main body is made of fabric. The outer connecting edge of the first positioning support piece is connected to the top of the bracket, and the inner connecting edge of the first positioning support piece is connected to the upper part of the magnetic circuit system. The second positioning support piece is located below the first positioning support piece, the outer connecting edge of the second positioning support piece is connected to the lower part of the bracket, and the inner connecting edge of the second positioning support piece is connected to the lower part of the magnetic circuit system. The resonance frequency of the on-board bass shaker in the present disclosure is low at low frequencies, facilitating creating a good 4D effect in a vehicle.

## Description

This application claims priority to Chinese patent applications CN202211296886X and CN2022227792466, filed on October 21, 2022.

### TECHNICAL FIELD

The present disclosure relates to a vehicle low-frequency acoustic actuator and an automobile sound system.

### BACKGROUND

The low-frequency acoustic actuator can be mounted in an automobile seat to emit low-frequency sound and generate vibration, thereby cooperating with a loudspeaker (such as a door panel loudspeaker) of an automobile sound system to create a 4D effect. The low-frequency acoustic actuator includes a voice coil and a magnetic driver for generating a magnetic field for the voice coil. After the voice coil is energized, the voice coil and the magnetic field of the magnetic driver cooperate to generate electromagnetic action, and the voice coil reciprocates axially to output Low-frequency sound or vibration. However, the voice coil may deviate from its axial direction and shake deviated from the axial direction, thereby reducing the output sound quality. Currently, a positioning support made of metal is provided to prevent the voice coil from shaking deviated from the axial direction. However, the structural stability of such an acoustic actuator is still not good enough, and the frequency of the low-frequency sound cannot be lower.

### SUMMARY

The present disclosure relates to a vehicle low-frequency acoustic actuator and an automobile sound system, which have a lower resonance frequency at a low frequency, thereby helping to create a better 4D effect in a vehicle.

An aspect of the present disclosure provides a vehicle low-frequency acoustic actuator, including a frame, a voice coil, and a magnetic driver, the magnetic driver having a magnetic gap, an upper end of the voice coil being inserted into the magnetic gap, and a lower end of the voice coil being connected to the frame;
the vehicle low-frequency acoustic actuator further including a first positioning support and a second positioning support, each of the first positioning support and the second positioning support including an outer connecting edge, an inner connecting edge, and a main body connected between the outer connecting edge and the inner connecting edge, the main body being made of fabric;
wherein at least part of the magnetic driver is located within the frame, the outer connecting edge of the first positioning support is connected to a top of the frame, and the inner connecting edge of the first positioning support is connected to an upper portion of the magnetic driver;
the second positioning support is located below the first positioning support, the outer connecting edge of the second positioning support is connected to a lower portion of the frame, and the inner connecting edge of the second positioning support is connected to a lower portion of the magnetic driver.

In an embodiment, the main body has flexibility. The main body can be woven from plant fibers or synthetic fibers.

In an embodiment, the fabric is selected from one or a combination of more of the group consisting of cotton, linen, bolting cloth, COMEX, and blended fabric.

In an embodiment, the main body of the first positioning support has one or more laps of corrugations rising and falling up and down, a center or geometric center of the corrugations is located on a centerline of the voice coil.

In an embodiment, the body of the second positioning support has one or more laps of corrugations rising and falling up and down, and a center or geometric center of the corrugations is located on a centerline of the voice coil.

In an embodiment, the outer connecting edge and the inner connecting edge of the first positioning support and/or the second positioning support are respectively horizontally arranged.

In an embodiment, the outer connecting edge and the inner connecting edge of the first positioning support are on a same horizontal plane, and the horizontal plane is level with or lower than a lowest point of the body (specifically, a trough of the corrugations).

In an embodiment, the outer connecting edge and the inner connecting edge of the second positioning support are on a same horizontal surface, and the horizontal surface is level with or lower than a lowest point of the body (specifically, a trough of the corrugations).

In an embodiment, the frame comprises a bottom plate for connecting with a seat of the vehicle, a first flange and a second flange extending upwardly from the bottom plate, the first flange is annularly arranged around the second flange, the first flange is higher than the second flange, the second flange being annularly is arranged around the magnetic driver and the voice coil, the outer connecting edge of the first positioning support is fixedly connected to an upper surface of the first flange, and the outer connecting edge of the second positioning support is fixedly connected to an upper surface of the second flange.

In an embodiment, the magnetic driver comprises a magnetic conductor, a magnetic steel and a front panel arranged in the magnetic conductor, the magnetic gap is formed between an inner side surface of the magnetic conductor and outer side surfaces of the magnetic steel and the front panel, the inner connecting edge of the first positioning support plate is connected to an upper surface of the magnetic conductor, and the inner connecting edge of the second positioning support plate is connected to a lower surface of the magnetic conductor.

In an embodiment, the magnetic conductor has a base and a sidewall extending downwardly from an edge of the base, the magnetic steel and the front panel are arranged in a space enclosed by the sidewall, the inner connecting edge of the first positioning support is connected to an upper surface of the base of the magnetic conductor, and the inner connecting edge of the second positioning support is connected to a lower surface of the sidewall of the magnetic conductor.

In an embodiment, the middle part of the bottom plate further has an upwardly extending boss, and the lower end of the voice coil is sleeved on the boss and fixedly connected with the side surface of the boss.

In an embodiment, the frame is provided with a bolt or a glue layer for connecting with the car seat.

In an embodiment, the vehicle low-frequency acoustic actuator further comprises a wiring board arranged within the frame and connected with lead wires of the voice coil.

A second aspect of the present disclosure provides an automobile audio system including the vehicle low-frequency acoustic actuator as described above. Further, the automobile audio system further comprises one or more of a tweeter, a door panel loudspeaker and a headrest loudspeaker.

In an embodiment, the vehicle low-frequency acoustic actuator is configured to be mounted on a metal plate of a car seat.

The present disclosure has the following advantages:
the vehicle low-frequency acoustic actuator of the present disclosure connects the magnetic driver and the frame by two flexible positioning supports, which has good structural stability and good output sound quality, avoids the voice coil from deviating from the axial direction, reduces the possibility of the voice coil from deviating from the axial direction, can obtain a lower low-frequency resonance frequency (which can be as low as 60 Hz), and can create a good 4D effect cooperates with other loudspeakers within the vehicle when applied to a vehicle audio system.

### BRIEF DESCRIPTION OF DRAWINGS

In order to more clearly illustrate the technical solutions of the present disclosure, the drawings required to be used in the following embodiment description will be briefly introduced. Obviously, the drawings in the following description are only some embodiments of the present disclosure, and other drawings can be obtained according to these drawings without creative labor for those skilled in the art.
FIG. 1 is an exploded schematic view of a vehicle low-frequency acoustic actuator according to Embodiment 1 of the present disclosure.
FIG. 2 is a top view of the vehicle low-frequency acoustic actuator according to Embodiment 1 of the present disclosure.
FIG. 3 is a sectional view along line A-A in FIG. 2.
FIG. 4 is an exploded schematic view of a vehicle low-frequency acoustic actuator according to Embodiment 2 of the present disclosure.
FIG. 5 is a sectional view of the vehicle low-frequency acoustic actuator according to Embodiment 2 of the present disclosure.
FIG. 6 is a graph showing the impedance curves of the loudspeaker of Embodiment 1 and the comparative example.

The reference numerals are as follows:
1 - frame; 10 - bottom plate; 11 - first flange; 12 - second flange; 13 - boss;
2 - voice coil;
3 - magnetic driver; 30 - magnetic conductor; 301 - base; 302 - sidewall; 31 - magnetic steel; 32 - front piece;
4 - first positioning support; 41 - outer connecting edge; 42 - main body portion; 43 - inner connecting edge;
5 - second positioning support; 51 - outer connecting edge; 52 - main body portion; 53 - inner connecting edge;
6 - wiring board;
71 - dustproof ring; 72 - adhesive layer;
8 - bolt.

### DETAILED DESCRIPTION

The preferred embodiments of the present disclosure will be described below in detail with reference to the drawings so that the advantages and features of the present disclosure can be understood more easily by those skilled in the art. It should be noted that the description of the embodiments is used to help understand the present disclosure, but does not constitute a limitation on the present disclosure. In addition, the technical features involved in the various embodiments of the present disclosure described below can be combined with each other as long as there is no conflict.

In the present disclosure, "inner" and "outer" are defined with reference to the center line of the voice coil, with the orientation closer to the center line of the voice coil being the inner orientation, and vice versa. The terms "upper", "lower" and "horizontal" are intended to facilitate understanding of the structure of the vehicle low-frequency acoustic actuator by those skilled in the art, and are not used to define the state of the vehicle low-frequency acoustic actuator after it is mounted on the vehicle; for example, the vehicle low-frequency acoustic actuator can be mounted on an inclined part, an upright part or the lower surface of a part in the vehicle.

The present embodiment provides a vehicle low-frequency acoustic actuator which is used in an automobile audio system and cooperates with a tweeter, a door panel loudspeaker or a headrest loudspeaker of the automobile audio system to create a 4D effect. The vehicle low-frequency acoustic actuator is mounted in a seat of the vehicle, emits low-frequency sound and outputs vibration.

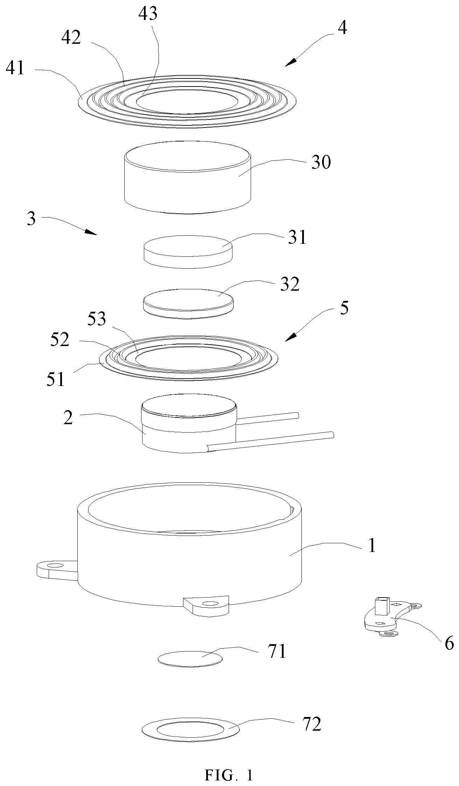

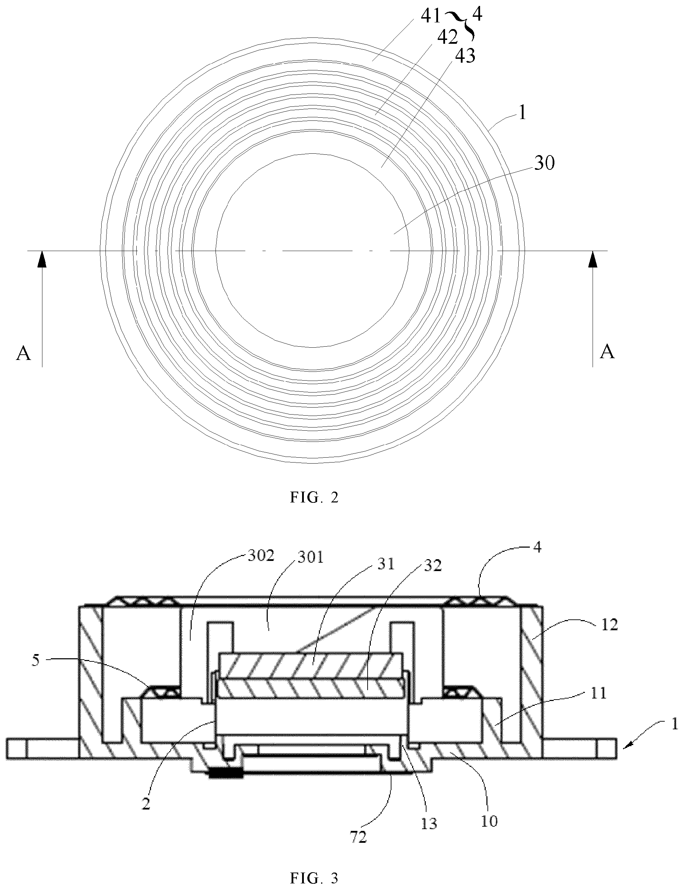

An example of the vehicle low-frequency acoustic actuator shown in FIGS. 1 to 3 includes a frame 1 having a cavity, a voice coil 2 and a magnetic driver 3, wherein the voice coil 2 and the magnetic driver 3 are disposed in the cavity. The magnetic driver 3 has a magnetic gap, and the upper end of the voice coil 2 is inserted into the magnetic gap, and the lower end of the voice coil 2 is connected to the frame 1, for example, the lower end of the voice coil 2 is glued to the frame 1 by an adhesive. The voice coil 2 has a pair of positive and negative lead wires, and can be energized and receive an audio signal. The vehicle low-frequency acoustic actuator further includes a first positioning support 4 and a second positioning support 5, and the magnetic driver 3 is arranged within the frame 1 by the first positioning support 4 and the second positioning support 5, while the relative movement between the magnetic driver 3 and the frame 1 is allowed.

The first positioning support 4 includes an outer connecting edge 41, an inner connecting edge 43 and a main body 42 connected between the outer connecting edge 41 and the inner connecting edge 43, and the second positioning support 5 includes an outer connecting edge 51, an inner connecting edge 53 and a main body 52 connected between the outer connecting edge 51 and the inner connecting edge 53. The main bodies 42 and 52 are made of fabric and have a plurality of up-and-down corrugations, and the circular or geometric center of the corrugations is located on the center line of the voice coil 2. The main bodies 42 and 52 are made of fabric with flexibility, which is woven by plant fibers or synthetic fibers. Specifically, the main bodies 42 and 52 are cut from cloth (for example, cotton cloth, linen, bolting cloth, COMEX or blended fabric, etc.) and processed to have the up-and-down corrugations, instead of being made of metal sheets or metal wires. Further, the first positioning support 4 and the second positioning support 5 are integrally made of the flexible fabric. In some other embodiments, the first positioning support 4 and the second positioning support 5 are prepared by cutting the flexible fabric into a required annular shape, covering the inner and outer edges, and processing the up-and-down corrugations thereon.

At least part of the magnetic driver 3 is located within the frame 1, and in this example, the magnetic driver 3 is located within the frame 1 as a whole. The magnetic driver 3 is shielded by the frame 1 when viewed from the side. The outer connecting edge 41 of the first positioning support 4 is connected to the top of the frame 1, and the inner connecting edge 43 of the first positioning support 4 is connected to the upper portion of the magnetic driver 3. In this embodiment, the magnetic driver 3 is located within the frame 1 as a whole, and the top of the magnetic driver 3 is flush with the top of the frame 1. The second positioning support 5 is located below the first positioning support 4, the outer connecting edge 51 of the second positioning support 5 is connected to the lower portion of the frame 1, and the inner connecting edge 53 of the second positioning support 5 is connected to the lower portion of the magnetic driver 3.

Further, the frame 1 comprises a bottom plate 10 for connecting with the automobile seat, a first flange 11 and a second flange 12 extending upward from the bottom plate 10, the first flange 11 surrounds the periphery of the second flange 12, the first flange 11 is higher than the second flange 12, the second flange 12 surrounds the periphery of the magnetic driver 3 and the voice coil 2, the outer connecting edge 41 of the first positioning support 4 is fixedly connected to the upper surface of the first flange 11, and the outer connecting edge 41 of the second positioning support 5 is fixedly connected to the upper surface of the second flange 12. When viewed from the top, the first flange 11 and the second flange 12 are annular and concentrically arranged with the voice coil 2 and the magnetic driver 3; the first positioning support 4 and the second positioning support 5 are annular as a whole and concentrically arranged with the voice coil 2 and the magnetic driver 3. Specifically, the upper surface of the first flange 11 is fixedly connected to the lower surface of the outer connecting edge 41 of the first positioning support 4, for example, by adhesive; the upper surface of the second flange 12 is fixedly connected to the lower surface of the outer connecting edge 41 of the second positioning support 5, for example, by adhesive. The outer connecting edges and the inner connecting edges of the first positioning support 4 and the second positioning support 5 are horizontally arranged respectively. The outer connecting edge 41 and the inner connecting edge 43 of the first positioning support 4 are on the same horizontal plane, which is flush with or lower than the lowest point (specifically, the trough of the corrugations) of the main body 42 of the first positioning support 4. The outer connecting edge 51 and the inner connecting edge 53 of the second positioning support 5 are on another same horizontal plane, which is flush with or lower than the lowest point (specifically, the trough of the corrugations) of the main body 52 of the second positioning support 5.

The magnetic driver 3 includes a magnetic conductor 30, a magnetic steel 31 and a front panel 32 arranged within the magnetic conductor 30, a magnetic gap is formed between the inner side surface of the magnetic conductor 30 and the outer side surface of the magnetic steel 31 and the front panel 32, the inner connecting edge 43 of the first positioning support 4 is connected to the upper surface of the magnetic conductor 30, and the inner connecting edge 43 of the second positioning support 5 is connected to the lower surface of the magnetic conductor 30. Further, the magnetic conductor 30 is bowl-shaped, for example, can be a U-shaped iron. The magnetic conductor 30 has a base 301 and a sidewall 302 extending downward from the edge of the base 301, the magnetic steel 31 and the front panel 32 are arranged in the space surrounded by the sidewall 302, the inner connecting edge 43 of the first positioning support 4 is connected to the upper surface of the base 301 of the magnetic conductor 30, and the inner connecting edge 43 of the second positioning support 5 is connected to the lower surface of the sidewall 302 of the magnetic conductor 30. Specifically, the lower surface of the inner connecting edge 43 of the first positioning support 4 is fixedly connected to the upper surface of the bottom plate 10 of the magnetic conductor 30, for example, can be bonded by an adhesive, and the upper surface of the inner connecting edge 43 of the second positioning support 5 is fixedly connected to the lower surface of the sidewall 302 of the magnetic conductor 30, for example, can be bonded by an adhesive.

The middle part of the bottom plate 10 further has a boss 13 extending upward, the lower end of the voice coil 2 is sleeved on the boss 13 and is fixedly connected to the side surface of the boss 13, for example, can be bonded by an adhesive. The frame 1 can be provided with an assembly hole and can be connected to the automobile seat by a fastener. In addition, the frame 1 is further provided with a dustproof ring 71 on the bottom plate 10. Further, the frame 1 is further embedded with a wiring board 6, the positive and negative leads of the voice coil 2 are connected to the wiring board 6, and the wiring board 6 is connected to a power amplifier to input an audio signal.

Further, the frame 1 is further provided with an adhesive layer 72 on the bottom plate 10 to closely contact with the automobile seat, for example, is bonded to the sheet metal part of the automobile seat. The adhesive layer can be an adhesive tape, for example, a double-sided adhesive tape.

The vehicle low-frequency acoustic actuator of the embodiment uses the first positioning support 4 and the second positioning support 5 to flexibly connect the magnetic driver 3 and the frame 1, and when the acoustic actuator works, the vibrating magnetic driver 3 and the voice coil 2 simultaneously move along the axial direction (the center line direction of the voice coil 2), the double-positioning support structure has better stability, the positioning support has better adjustability in material, weaving number and hardness, and the performance parameters of the exciter can be better controlled. Meanwhile, the installation employs the frame 1 combined with the double-sided adhesive tape fixing and the bolt fixing, thus the operation is convenient.

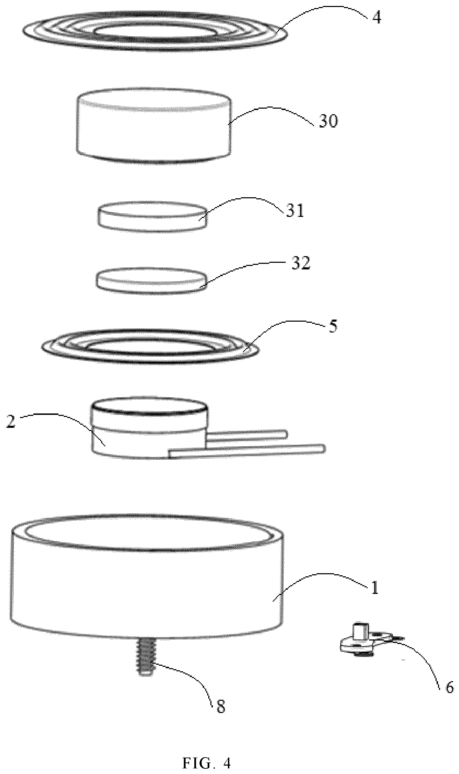

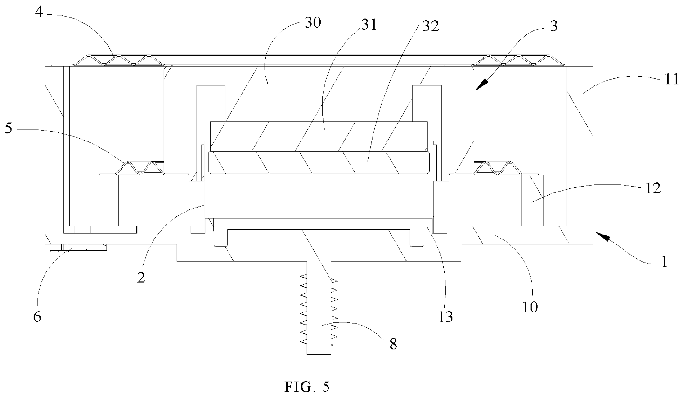

FIGS. 4 to 5 show another example of the vehicle low-frequency acoustic actuator. The difference between the example and the vehicle low-frequency acoustic actuator shown in FIGS. 1 to 3 is that, as shown in FIGS. 4 and 5, the bottom plate 10 is provided with bolts 8 instead of the adhesive layer, and is closely connected to the automobile seat by the bolts 8. Specifically, the bolts 8 are fixed on the bottom plate 10 or are integrally prepared with the bottom plate 10, and the bottom plate 10 can be fixed on the metal plate of the automobile seat by the bolts 8. The bottom plate 10 is made of plastic, and the bolts 8 can be metal, and the two can be formed by an insert injection molding process; the bolts 8 can also be plastic, and the two are integrally injection molded.

Further, the bottom plate 10 can be provided with a glue layer, which can be bonded to the metal plate of the automobile seat. The automobile low-frequency acoustic actuator is fixed to the metal plate of the automobile seat through the cooperation of the bolt 8 and the glue layer.

### Comparative Example

The vehicle low-frequency acoustic actuator provided by the comparative example is different from the example shown in FIGS. 1 to 3 in that the number and material of the positioning supports are different, and the other parts are the same. That is, the U-shaped iron of the automobile low-frequency acoustic actuator of the comparative example is connected to the frame through a steel positioning support, and the single steel positioning support replaces the first positioning support and the second positioning support in the above example.

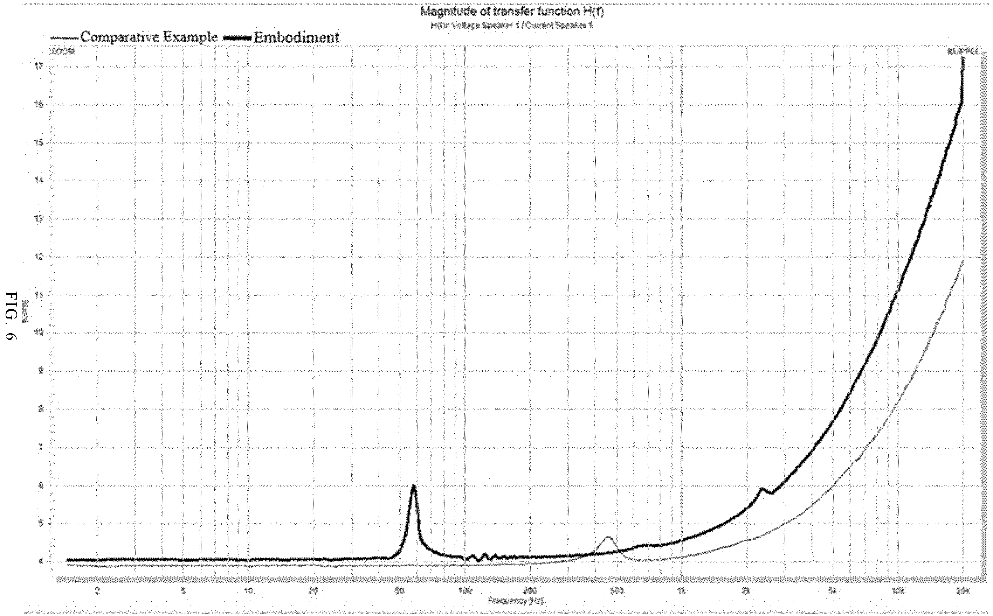

The impedance curves of the vehicle low-frequency acoustic actuator shown in FIGS. 1 to 3 and the automobile low-frequency acoustic actuator of the comparative example are shown in FIG. 6. The lighter and thinner curve represents the impedance curve of the low-frequency acoustic actuator of the comparative example, and the darker and thicker curve represents the impedance curve of the automobile low-frequency acoustic actuator shown in FIGS. 1 to 3. The comparison between the two is as follows: from the impedance curve, the resonance frequency of the low-frequency acoustic actuator of the comparative example is about 460 Hz, and the resonance frequency of the vehicle low-frequency acoustic actuator shown in FIGS. 1 to 3 is not higher than 60 Hz. Obviously, the vehicle low-frequency acoustic actuator shown in FIGS. 1 to 3 can make the low-frequency frequency lower, and the advantage is very obvious.

Those skilled in the art will understand that the singular forms "a," "an," and "the" used herein include plural referents unless the context clearly dictates otherwise.

As shown in the specification and claims, the terms "comprising", "comprises" and "comprised of" as used herein is intended to specify the presence of the stated features, elements, steps, and components, but do not preclude the presence or addition of one or more other features, elements, steps, components, or groups thereof.

It should be further understood that "a plurality of" in the present disclosure means two or more, and other quantifiers are similar.

It should be further understood that the terms "first", "second", and so on are used to describe various information, but these information should not be limited to these terms. These terms are only used to distinguish the same type of information from each other, and do not represent a specific order or importance. In fact, "first", "second", and so on can be used interchangeably. For example, the first information can also be referred to as the second information, and similarly, the second information can also be referred to as the first information without departing from the scope of the present disclosure.

In the present embodiment, unless specifically stated and limited otherwise, "on" or "under" a first feature in relation to a second feature can include that the first and second features are in direct contact, or that the first and second features are not in direct contact but are in contact through another feature therebetween. Furthermore, "on", "above" and "on top of" a first feature in relation to a second feature can include that the first feature is directly above and diagonally above the second feature, or only means that the first feature is at a higher horizontal level than the second feature. "Under", "below" and "underneath" a first feature in relation to a second feature can include that the first feature is directly below and diagonally below the second feature, or only means that the first feature is at a lower horizontal level than the second feature.

The above embodiment is only for illustrating the technical concept and characteristics of the present disclosure, and is a preferred embodiment, and the purpose is to enable those skilled in the art to understand the content of the present disclosure and implement the same, and cannot be used to limit the protection scope of the present disclosure.

## Claims

1. A vehicle low-frequency acoustic actuator, comprising a frame, a voice coil and a magnetic driver, the magnetic driver having a magnetic gap, an upper end of the voice coil being inserted into the magnetic gap, and a lower end of the voice coil being connected to the frame;
is **characterized in that**, the vehicle low-frequency acoustic actuator further comprises a first positioning support and a second positioning support, each of the first positioning support and the second positioning support comprising an outer connecting edge, an inner connecting edge and a main body connected between the outer connecting edge and the inner connecting edge, the main body being made of fabric;
at least part of the magnetic driver is located within the frame, the outer connecting edge of the first positioning support is connected to a top of the frame, and the inner connecting edge of the first positioning support is connected to an upper portion of the magnetic driver;
the second positioning support is located below the first positioning support, the outer connecting edge of the second positioning support is connected to a lower portion of the frame, and the inner connecting edge of the second positioning support is connected to a lower portion of the magnetic driver.

2. The vehicle low-frequency acoustic actuator according to claim 1, is **characterized in that**, the main body is flexible.

3. The vehicle low-frequency acoustic actuator according to claim 1 or 2, is **characterized in that**, the fabric is selected from one or a combination of more of the group consisting of cotton, linen, bolting cloth, COMEX and blended fabric.

4. The vehicle low-frequency acoustic actuator according to any one of the preceding claims, is **characterized in that**, the main body of the first positioning support has one or more laps of corrugations rising and falling up and down, a center or a geometric center of the corrugations being located on a center line of the voice coil.

5. The vehicle low-frequency acoustic actuator according to any one of the preceding claims, is **characterized in that**, the main body of the second positioning support has one or more laps of corrugations rising and falling up and down, a center or a geometric center of the corrugations being located on a center line of the voice coil.

6. The vehicle low-frequency acoustic actuator according to any one of the preceding claims, is **characterized in that**, the outer connecting edge and the inner connecting edge of the first positioning support and/or the second positioning support are respectively horizontally arranged.

7. The vehicle low-frequency acoustic actuator according to any one of the preceding claims, is **characterized in that**, the outer connecting edge and the inner connecting edge of the first positioning support are on a same horizontal plane, the horizontal plane being level with or lower than a lowest point of the main body.

8. The vehicle low-frequency acoustic actuator according to any one of the preceding claims, is **characterized in that**, the outer connecting edge and the inner connecting edge of the second positioning support are on a same horizontal plane, the horizontal plane being level with or lower than a lowest point of the main body.

9. The vehicle low-frequency acoustic actuator according to any one of the preceding claims, is **characterized in that**, the frame comprises a bottom plate for connecting with a seat of the vehicle, a first flange and a second flange extending upwardly from the bottom plate, the first flange is annularly arranged around the second flange, the first flange is higher than the second flange, the second flange is annularly arranged around the magnetic driver and the voice coil, the outer connecting edge of the first positioning support is fixedly connected to an upper surface of the first flange, and the outer connecting edge of the second positioning support is fixedly connected to an upper surface of the second flange.

10. The vehicle low-frequency acoustic actuator according to claim 9, is **characterized in that**, the magnetic driver comprises a magnetic conductor, a magnetic steel and a front panel arranged in the magnetic conductor, the magnetic gap is formed between an inner side surface of the magnetic conductor and outer side surfaces of the magnetic steel and the front panel, the inner connecting edge of the first positioning support plate is connected to an upper surface of the magnetic conductor, and the inner connecting edge of the second positioning support plate is connected to a lower surface of the magnetic conductor.

11. The vehicle low-frequency acoustic actuator according to claim 10, is **characterized in that**, the magnetic conductor has a base and a sidewall extending downwardly from an edge of the base, the magnetic steel and the front panel are arranged in a space enclosed by the sidewall, the inner connecting edge of the first positioning support is connected to an upper surface of the base of the magnetic conductor, and the inner connecting edge of the second positioning support is connected to a lower surface of the sidewall of the magnetic conductor.

12. The vehicle low-frequency acoustic actuator according to claim 9, is **characterized in that**, the bottom plate further has a boss extending upwardly in a middle portion thereof, and the lower end of the voice coil is sleeved on the boss and fixedly connected to a side surface of the boss.

13. The vehicle low-frequency acoustic actuator according to any one of the preceding claims, is **characterized in that**, the frame is provided with a bolt and/or a glue layer for connecting with the seat of the vehicle.

14. The vehicle low-frequency acoustic actuator according to any one of the preceding claims, is **characterized in that**, the vehicle low-frequency acoustic actuator further comprises a wiring board arranged within the frame and connected to lead wires of the voice coil.

15. The vehicle low-frequency acoustic actuator according to any one of the preceding claims, is **characterized in that**, the vehicle low-frequency acoustic actuator is configured to be mounted on a metal plate of the seat of the vehicle.

16. An automobile audio system, is **characterized in that**, the system comprises the vehicle low-frequency acoustic actuator according to any one of claims 1 to 15.
